Europäisches Patentamt

European Patent Office

Office européen des brevets

(11) Publication number: **0 280 148 B1**

## EUROPEAN PATENT SPECIFICATION

(45) Date of publication of patent specification: **28.08.91**   (51) Int. Cl.⁵: **A47C 31/02**

(21) Application number: **88102196.8**

(22) Date of filing: **15.02.88**

(54) Fastening assembly for vehicle seat upholstery.

(30) Priority: **20.02.87 IT 5304887 U**

(43) Date of publication of application:
**31.08.88 Bulletin 88/35**

(45) Publication of the grant of the patent:
**28.08.91 Bulletin 91/35**

(84) Designated Contracting States:
**DE ES FR GB SE**

(56) References cited:
**DE-A- 2 030 094**
**GB-A- 2 046 588**
**US-A- 3 794 378**

(73) Proprietor: **FIAT AUTO S.p.A.**
**Corso Giovanni Agnelli 200**
**I-10135 Torino(IT)**

(72) Inventor: **Sbaragli, Silvano**
**Via Europa, 15**
**I-10048 Vinovo(IT)**
Inventor: **Vitale, Carlo**
**Via Pietro Nenni, 3**
**I-10042 Nichelino(IT)**

(74) Representative: **Prato, Roberto et al**
**STUDIO TORTA Società Semplice Via Viotti 9**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a vehicle seat upholstering assembly, in particular, for fastening upholstery to the seat padding according to the preamble of claim 1.

The standard practice for securing upholstery to the padding on vehicle seats is by means of assemblies consisting of pairs of bars or rods, of which one is sunk inside the padding and the other housed inside a tubular fabric sheath integral with (e.g. stitched to) the upholstery; which bars or rods are connected together by means of a number of metal fasteners as for example described in US-A-3794378 and DE-A-2030094. The said rods are usually of steel and straight in shape, to enable insertion inside the said sheath.

The portions whereby the upholstery is secured to the padding, which are usually in the form of visible stitching defining and separating loosely padded portions of the upholstery, form the pattern characterising the design of the seat.

Using known fastening assemblies, the said portions cannot be other than straight, in order to match the underlying rods, which fact poses serious limitations in terms of seat pattern design.

The aim of the present invention is to provide a fastening assembly for securing upholstery to the padding of a vehicle seat and designed to overcome the aforementioned drawback typical of known fastening assemblies of the aforementioned type.

The object of the invention is solved by the features of the characterising part of claim 1.

A preferred embodiment of the present invention will be described with reference to the accompanying drawings, in which :

Fig.1 shows a section of a fastening assembly for securing upholstery to the padding of a vehicle seat, in accordance with the teachings of the present invention;

Fig.2 shows a view in perspective of an element on the Fig.1 assembly prior to fastening;

Fig.3 shows a schematic view of a vehicle seat featuring the fastening assembly according to the present invention.

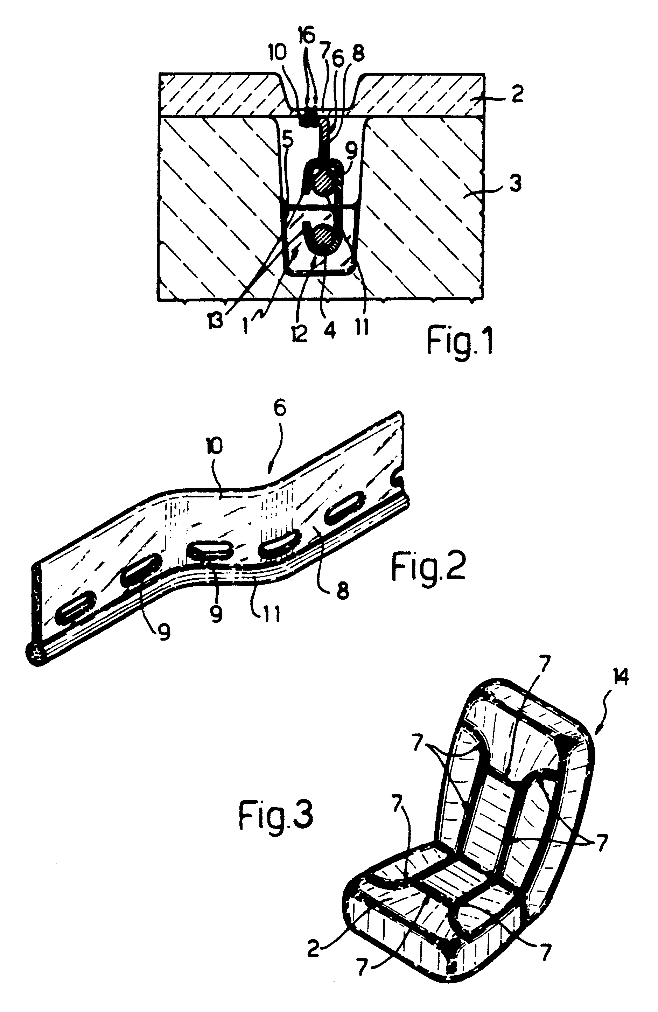

Number 1 in Fig.1 indicates a fastening assembly for securing upholstery 2 to the padding 3 of a vehicle seat. Assembly 1 comprises a round-section bar 4 conveniently formed of steel, which is housed inside a recess 5 in padding 3, and portions of which are sunk inside the said padding 3. Bar 4 and respective recess 5 may be curved as required.

Assembly 1 also comprises a flexible section 6 preferably formed of plastic, curved so as to match bar 4, and secured, e.g. stitched, to a thinner portion 7 of upholstery 2.

As shown clearly in Fig.2, section 6 presents an initial elongated-straight-section rib 8 having a number of equally-spaced longitudinal slots 9 aligned in the vicinity of a longitudinal edge 11 substantially in the form of a cylindrical projection and which provides for strengthening.

When upholstering the said seat, edge 10 of section 6, opposite the said edge 11, is bent, conveniently by applying heat, into a tab 10 integral with and perpendicular to rib 8 (Fig.1). In actual use, the said tab 10 is stitched to upholstery 2, as shown schematically by stitches 16 in Fig.1.

Section 6 and bar 4 are brought together, so that section 6 is also housed inside recess 5, and connected together by means of a number of substantially C-shaped metal fasteners 12, which engage a respective slot 9 on section 6, and the opposite ends 13 of which surround the said edge 11 and bar 4. The grip of fasteners 12 is such as to bring together section 6 and bar 4 and so bring upholstery 2 into contact with padding 3.

Fig.3 shows an example of fastening assembly 1 according to the present invention applied to a vehicle seat 14, on which the straight and curved fastening portions 7 are clearly visible.

The advantages of fastening assembly 1 according to the present invention will be clear from the foregoing description. Firstly, flexible section 6 provides for an infinite variety of patterns, unlike known systems which are limited to straight lines. Secondly, in addition to being secured using metal fasteners, in exactly the same way as traditional rods, the said section may be stitched directly to upholstery 2, thus eliminating not only the rod but also the respective fabric sheath. Finally, the said section 6 may be employed on any type of seat, and for upholstery of any type or design, with obvious advantages in terms of scale economy.

To those skilled in the art it will be clear that changes may be made to assembly 1 as described and illustrated herein without, however, departing from the scope of the present invention according to the appended claims. For example, changes may be made to the shape of section 6, and to the manner in which it is secured to both upholstery 3 (e.g. electrowelded) and to bar 4.

## Claims

1. A fastening assembly (1) for securing upholstery (2) to the padding (3) of a vehicle seat (14), which assembly comprises anchor means integral with said padding (3); a plastic flexible section (6) having a portion (10) secured to said upholstery (2); and means for connecting said flexible section to said anchor means; characterised in that said anchor means comprise a bar (4) shaped to match said section (6), housed inside a respective recess (5) in said padding (3), and portions of which are sunk inside said padding (3); said section (6) being provided with a number of openings (9); said connecting means comprising a number of metal fasteners (12) engaging said bar (4) and respective said openings of said section (6).

2. A fastening assembly as claimed in claim 1, characterised in that said portion (10) of said section (6) is stitched to said upholstery (2).

3. A fastening assembly as claimed in claim 2, characterised in that said section (6) presents, at least subsequent to fastening said upholstery (2) to said padding (3), a substantially L-shaped section comprising a tab (10) and a rib (8) perpendicular to and integral with each other; said tab (10) constituting said portion stitched to said upholstery (2).

4. A fastening assembly as claimed in claim 3, characterised in that said rib (8) presents said openings (9).

5. A fastening assembly as claimed in claim 4, characterised in that said openings are equally spaced longitudinal slots (9).

6. A fastening assembly as claimed in anyone of the foregoing claims from 3 to 5, characterised in that said rib (8) on said section (6) presents a longitudinal strengthening projection (11) extending from the opposite side to said tab (10).

7. A fastening assembly as claimed in claim 6, characterised in that said metal fasteners (12) are C-shaped and engage a respective said opening (9) on said section (6); opposite ends of said fasteners (12) surrounding said longitudinal projection (11) on said section (6) and said bar (4).

**Revendications**

1. Ensemble de fixation (1) pour fixer une garniture (2) sur la rembourrure (3) d'un siège de véhicule (14), cet ensemble comprenant des moyens d'ancrage solidarisés de la rembourrure (3), une section flexible en matière plastique (6) ayant une portion (10) fixée sur la garniture (2), et des moyens pour relier cette section flexible aux moyens d'ancrage, caractérisé en ce que ces moyens d'ancrage comprennent une barre (4) formée pour correspondre à cette section (6), logée à l'intérieur d'un évidement correspondant (5) dans la rembourrure (3), et ayant des portions noyées à l'intérieur de la rembourrure (3), cette section (6) comportant un certain nombre d'ouvertures (9), et les moyens de liaison comportant un certain nombre d'éléments de fixation métalliques (12) coopérant avec la barre (4) et les ouvertures respectives de la section (6).

2. Ensemble de fixation selon la revendication 1, caractérisé en ce que la portion (10) de la section (6) est cousue sur la garniture (2).

3. Ensemble de fixation selon la revendication 2, caractérisé en ce que la section (6) présente, au moins aux endroits de fixation de la garniture (2) sur la rembourrure (3), une section ayant pratiquement la forme d'un L, comprenant un rebord (10) et une nervure (8) perpendiculaires l'une à l'autre et d'un seul tenant l'une avec l'autre, ce rebord (10) constituant la portion piquée sur la garniture (2).

4. Ensemble de fixation selon la revendication 3, caractérisé en ce que la nervure (8) présente des ouvertures (9).

5. Ensemble de fixation selon la revendication 4, caractérisé en ce que ces ouvertures sont des fentes longitudinales équidistantes (9).

6. Ensemble de fixation selon l'une quelconque des revendications 3 à 5, caractérisé en ce que la nervure (8) sur la section (6) présente un renforcement longitudinal en saillie (11) s'étendant sur le côté opposé au rebord (10).

7. Ensemble de fixation selon la revendication 6, caractérisé en ce que les éléments de fixation métalliques (12) sont en forme de C et coopèrent avec une ouverture respective (9) sur la section (6), les extrémités opposées de ces éléments de fixation (12) entourant le renforcement longitudinal en saillie (11) sur cette section (6) et la barre (4).

**Patentansprüche**

1. Befestigungsanordnung (1) zum Befestigen des Polsterüberzuges (2) mit der Polsterung (3) eines Fahrzeugsitzes (14), die mit der Polsterung (3) integrierte verankerungsmittel, einen verformbaren flexiblen Abschnitt (6) mit einem Bereich (10), der an dem Polsterüberzug (2) angeordnet ist, und Mittel zum Verbinden des flexiblen Abschnittes mit den Verankerungsmitteln aufweist, dadurch gekennzeichnet, daß die Verankerungsmittel einen Stab (4) aufweisen, der ausgebildet ist, daß er mit Abschnitt (6) zusammenpaßt, der im Innern einer entsprechenden Vertiefung in der Polsterung (3) aufgenommen ist, und wobei Bereiche von ihm im Inneren der Polsterung (3) versenkt sind, daß der Abschnitt (6) mit einer Anzahl Öffnungen (9) versehen ist und die Verbindungsmittel eine Anzahl Metallbefestigungsmittel (12) aufweisen, die mit den Stab (4) und entsprechenden Öffnungen des Abschnittes (6) zusammenwirken.

2. Befestigungsanordnung nach Anspruch 1, dadurch gekennzeichnet, daß der Bereich (10) des Abschnittes (6) mit dem Polsterüberzug (2) verheftet ist.

3. Befestigungsanordnung nach Anspruch 2, dadurch gekennzeichnet, daß der Abschnitt (6) zumindest nach dem Befestigen des Polsterüberzugs (2) mit der Polsterung (3) einen im wesentlichen L-förmigen Bereich darstellt, der einen Streifen (10) und eine Rippe (8) aufweist, die lotrecht zu und integriert miteinander sind, wobei der Steifen (10) den Abschnitt bildet, der mit dem Polsterüberzug (2) verheftet ist.

4. Befestigungsanordnung nach Anspruch 3, dadurch gekennzeichnet, daß die Rippe (8) die Öffnungen (9) aufweist.

5. Befestigungsanordnung nach Anspruch 4, dadurch gekennzeichnet, daß die Öffnungen gleichmäßig beabstandete Langlöcher (9) sind.

6. Befestigungsanordnungen nach irgendeinem der vorangegangenen Ansprüche 3 bis 5, dadurch gekennzeichnet, daß die Rippe (8) am Abschnitt (6) einen länglichen Verstärkungsvorsprung (11) aufweist, der sich von der entgegengesetzten Seite des Streifens (10) erstreckt.

7. Befestigungsanordnung nach Anspruch 6, dadurch gekennzeichnet, daß die Metallbefestigungsmittel (12) C-förmig sind, und eine entsprechende Öffnung (9) am Abschnitt (6) umgreifen, wobei die entgegengesetzten Enden der Befestigungsmittel (12) den länglichen Vorsprung (11) am Abschnitt (6) und den Stab (4) umgeben.

Fig.1

Fig.2

Fig.3